# EUROPEAN PATENT APPLICATION

(11) **EP 3 598 253 A1**
(43) Date of publication of application: **22.01.2020**
(21) Application number: 18183709.7
(22) Date of filing: 16.07.2018
(51) Int. Cl.: G05B 19/4093, G05B 19/4099, B29C 64/386

(54) **METHOD AND SYSTEM FOR MANUFACTURING A COMPONENT BY ADDITIVE MANUFACTURING**

(71) Applicant: Siemens Aktiengesellschaft, 80333 München (DE)
(72) Inventor: Fergani, Omar, 13347 Berlin (DE); Geisen, Ole, 10781 Berlin (DE); Madeley, David, Louth, LN11 8QY (GB)

(57) **Abstract**

The present invention is directed to a method for manufacturing a component by additive manufacturing. A set of properties (101) defining the component to be manufactured is obtained, wherein the set of properties defines a plurality of regions of the component. A list of suitable manufacturing materials (102) is provided by a digital backbone database based on the set of properties. A manufacturing material (103) is selected from the list of suitable manufacturing materials. A type of additive manufacturing device (104) is selected from a list of additive manufacturing devices provided by the digital backbone database. A set of instructions (105) for an additive manufacturing device is provided by the digital backbone database based on the selection of manufacturing material and the selection of additive manufacturing device, wherein the set of instructions comprises instructions for a plurality of zones based on the plurality of regions of the component as defined by the set of properties. The set of instructions (106) is transmitted to an additive manufacturing device of the selected type. The component (107) is manufactured by the additive manufacturing device based on the set of instructions.

## Description

The present invention is directed to a method for manufacturing a component by additive manufacturing and to a system for manufacturing a component by additive manufacturing.

Additive manufacturing processes, commonly also called 3D-printing processes, have gained substantial attractiveness for industrial applications.

However, components to be manufactured for industrial use may have very complex requirements for their material properties. In particular, the material properties of a component may vary among regions within the component.

While it is generally possible to create a component using additive manufacturing, which exhibits varying material properties across different regions, until now, this has been a highly inefficient way of manufacturing, as highly sophisticated knowledge of material properties and how to achieve them has been necessary, essentially restricting said manufacturing processes to small-scale operations.

In that context, it is an objective of the present invention, to permit additive manufacturing of components with complex internal material properties on an industrial scale.

Accordingly, a method for manufacturing a component by additive manufacturing is provided. The method comprises the steps of obtaining a set of properties defining the component to be manufactured, wherein the set of properties defines a plurality of regions of the component, providing a list of suitable manufacturing materials based on the set of properties by a digital backbone database, selecting a manufacturing material from the list of suitable manufacturing materials, selecting a type of additive manufacturing device from a list of additive manufacturing devices provided by the digital backbone database, providing a set of instructions for an additive manufacturing device based on the selection of the manufacturing material and the selection of the type of additive manufacturing device by the digital backbone database, wherein the set of instructions defines a plurality of zones corresponding to the plurality of regions of the component as defined by the set of properties, transmitting the set of instructions to an additive manufacturing device of the selected type, and manufacturing the component by the additive manufacturing device based on the set of instructions.

Furthermore, a system for manufacturing a component by additive manufacturing is provided. The system comprises an additive manufacturing device for performing additive manufacturing, an interface device, and a digital backbone database, wherein the interface device is configured to transmit a set of properties defining a component to be manufactured to the digital backbone database, select a manufacturing material from a list of suitable manufacturing materials, and select a type of additive manufacturing device from a list of additive manufacturing devices wherein the digital backbone database is configured to provide a list of suitable manufacturing materials based on the set of properties, provide a list of additive manufacturing devices, provide a set of instructions for an additive manufacturing device based on the selection of manufacturing material and the selection of additive manufacturing device, and transmit the set of instructions to the additive manufacturing device wherein the set of properties defines a plurality of regions of the component, and wherein the set of instructions defines a plurality of zones corresponding to the plurality of regions of the component as defined by the set of properties.

The main idea of the present invention is to provide a streamlined process for manufacturing a component using additive manufacturing from initial design all the way to the manufactured component. For that purpose a digital backbone database is provided which can generate the necessary instructions for an additive manufacturing device based on an input of properties for the component to be manufactured.

In one embodiment of the method, the set of properties comprises for each region of the component parameters corresponding to at least one of roughness, density, creep properties, fatigue properties, thermal durability, corrosion resistance, porosity, conductivity, thermal properties, and strength.

In another embodiment of the method, the set of instructions comprises parameters corresponding to at least one of laser power, scan speed, hatch spacing, layer thickness, laser pulse time, and skywriting time.

In another embodiment of the method, the plurality of zones comprises at least one zone corresponding to an intermediate region between two regions of the plurality of regions of the component. In this embodiment, it can be ensured that the transition from the first region to the second region is sufficiently smooth.

In another embodiment of the method, the plurality of zones comprises at least one zone corresponding to an exposed functional surface of the component. This enhances the surface properties of the component to be manufactured.

In another embodiment of the method, the plurality of zones corresponds to the plurality of regions in such a way, that there is a spatial beam offset between the edges of the zones and the edges of the regions. In particular, the spatial beam offset can be between 50µm and 400pm. As the material melted during the additive manufacturing process has a certain spatial spread, the spatial beam offset ensures that the properties in each region can be realized without smearing at the edges between regions.

In another embodiment of the method, the set of instructions comprises instructions to pause the additive manufacturing process for a period of time before and after manufacturing steps corresponding to a contour defining a limit between two of the plurality of regions. This allows the melted material associated with one region to cool and solidify before starting the manufacturing process for the next region. This provides for advantageously sharp junctions between regions.

In an embodiment of the system, the interface device is further configured to generate the set of properties. This gives a user interacting with the interface device advantageous control over the component to be manufactured.

The aforementioned configurations and embodiments can be combined as appropriate. Further possible configurations, embodiments and implementations of the invention may also include combinations of features of the invention not explicitly mentioned above or described below with regard to the examples of embodiments. In particular, the person skilled in the art will also add individual aspects as improvements or additions to the respective basic form of the present invention

The present invention is explained in more detail below using the embodiments shown in the schematic figures. They show in:
- Fig. 1: a schematic flow chart of an embodiment of a method for manufacturing a component using additive manufacturing; and
- Fig. 2: a schematic block diagram of an embodiment of a system for manufacturing a component using additive manufacturing.

The following figures are intended to provide a further understanding of the embodiments of the invention. They illustrate embodiments and serve in connection with the description of the principles and concepts of the invention. Other variations and many of the advantages mentioned can be found with regard to the drawings. The elements of the drawings are not necessarily shown to scale.

In the figures of the drawings, the elements, features and components, which have the same function and have the same effect, are each provided with the same reference signs, unless otherwise specified.

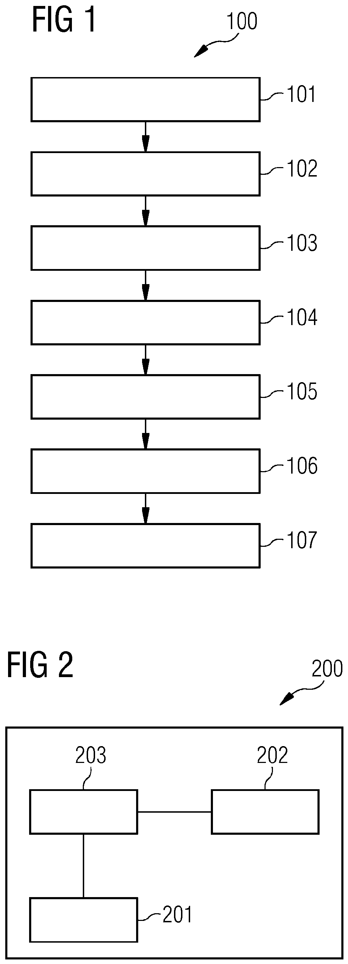

Figure 1 shows a schematic flow chart 100 of an embodiment of a method for manufacturing a component. In one method step 101, a set of properties defining the component to be manufactured is obtained. In another method step 102, a list of suitable manufacturing materials based on the set of properties is provided by a digital backbone database. In another method step 103, a manufacturing material is selected from the list of suitable manufacturing materials. In another method step 104, a type of additive manufacturing device is selected from a list of additive manufacturing devices provided by the digital backbone database. In another method step 105, a set of instructions for an additive manufacturing device is provided by the digital backbone database based on the selection of manufacturing material and the selection of additive manufacturing device. In another method step 106, the set of instructions is transmitted to an additive manufacturing device of the selected type. In another method step 107, the component is manufactured by the additive manufacturing device based on the set of instructions.

The set of properties obtained in method step 101 defines a plurality of regions of the component. In particular, each of the regions may comprise different material properties defined by a respective set of parameters as necessary for the intended use of the manufactured component.

Said parameters may correspond to roughness, density, creep properties, fatigue properties, thermal durability, corrosion resistance, porosity, conductivity, thermal properties, and/or strength of the material of the component in each region.

The set of instructions provided in method step 105 defines a plurality of zones corresponding to the plurality of regions of the component as defined by the set of properties. Each zone may be defined by a set of parameters defining the additive manufacturing process within said zone.

Said parameters may correspond to at least one of laser power, scan speed, hatch spacing, layer thickness, and laser pulse time, skywriting time.

Said zones therefore define the additive manufacturing process in such a way that, when the additive manufacturing device executes the instructions for each zone with the respective printing parameters, the resulting manufactured component will exhibit the material properties in each region as had been defined in the set of properties obtained in step 101.

A very simple example of the correspondence between the plurality of regions of the component and the plurality of zones of the instructions for the additive manufacturing process would be to define a singular zone for each of the regions. For each zone, the printing parameters are set in such a way that the manufactured component exhibits the material properties as desired for the corresponding region of the component.

However, the correspondence between the plurality of zones and the plurality of regions may also be more complex.

Said plurality of zones may for example comprise at least one zone corresponding to an intermediate region between two regions of the plurality of regions of the component. This can be advantageous in the case that a smooth transition between two adjacent regions with highly differing material properties is desired. By defining a transition zone between the adjacent regions, the additive manufacturing process can be controlled in such a way as to create a domain within the manufactured component which exhibits material properties intermediate between the material properties of the regions defined in method step 101 to be adjacent. This has the additional benefit that the step 101 of obtaining the set of properties can be facilitated, as a potential deficit in resolution in the plurality of regions can be compensated during the additive manufacturing process.

Said plurality of zones may further comprise at least one zone corresponding to a surface, for example an exposed surface, of the component. The correspondence between the desired material properties of the component and the printing parameters necessary to create said component can be different in surface regions as compared to bulk regions. In that case, it is advantageous to define an additional zone corresponding to said surface in order to set the parameters for the additive manufacturing process in the correct way.

Said plurality of zones may correspond to the plurality of regions in such a way, that there is a spatial beam offset between the edges of the zones and the edges of the regions. In particular, said spatial beam offset may be between 50µm and 400pm. In this case, the zones do not spatially correspond exactly to the regions. This can be advantageous if a strict junction between adjacent regions is desired. The additive manufacturing process has an inherent uncertainty, based on the size of the melting pool formed in the material. A spatial beam offset allows for compensation of said uncertainty, ensuring a sharp junction between adjacent regions of the component where this is desirable.

The set of instructions provided in method step 105 may further comprise instructions to pause the additive manufacturing process for a period of time before and after manufacturing steps corresponding to a contour defining a limit between two of the plurality of regions. This also helps ensuring sharp junctions between adjacent regions of the component by allowing the melting pool of the material to cool and solidify before the additive manufacturing process continues with the execution of the instructions for the zone corresponding to the next region.

The method step 101 of obtaining the set of properties can be performed in several different ways in the context of the present application. It is possible that the set of properties is created manually by a user with standard design software. Obtaining the set of properties can also be understood as merely retrieving the data from an external data storage system and transmitting it to a suitable system for additive manufacturing. Said retrieved set of properties can also be modified by a user before performing the subsequent method steps.

The set of instructions provided in method step 105 may define a series of subsequent two-dimensional layers or slices. In method step 107, the component can then be manufactured layer by layer, as is usual for additive manufacturing processes.

Figure 2 shows a schematic block diagram of a system 200 for manufacturing a component using additive manufacturing. The system 200 comprises an additive manufacturing device 201 for performing additive manufacturing, an interface device 202, and a digital backbone database 203.

The interface device 202 is configured to transmit a set of properties defining a component to be manufactured to the digital backbone database 203, select a manufacturing material from a list of suitable manufacturing materials, and select a type of additive manufacturing device from a list of additive manufacturing devices.

The interface device 202 may be a standard computational device running the appropriate software. In particular, the interface device 202 may be configured to allow a user to create the set of properties manually from scratch. Additionally or alternatively the interface device 202 may allow a user to access a plurality of predefined sets of properties for a plurality of components and select from said plurality the component to be manufactured without further modification of the set of properties necessary. The interface device 202 may also allow a user to modify a predefined set of properties.

The digital backbone database 203 is configured to provide a list of suitable manufacturing materials based on the set of properties, provide a list of additive manufacturing devices, provide a set of instructions for an additive manufacturing device 201 based on the selection of manufacturing material and the selection of additive manufacturing device, and transmit the set of instructions to the additive manufacturing device 201.

The digital backbone database 203 may be realized on a local storage device. Alternatively the digital backbone database 203 may be realized on a remote storage system, for example in form of a cloud-based service.

In Fig. 2, the additive manufacturing device 201 is shown to be connected to the digital backbone database 203, but not to the interface device 202. It is also possible for the interface device 202 to be connected to the additive manufacturing device 201 in order to give a user the possibility to better control the additive manufacturing process.

## Claims

1. Method for manufacturing a component by additive manufacturing, the method comprising:
- Obtaining a set of properties (101) defining the component to be manufactured, wherein the set of properties defines a plurality of regions of the component;
- Providing a list of suitable manufacturing materials (102) based on the set of properties by a digital backbone database;
- Selecting a manufacturing material (103) from the list of suitable manufacturing materials;
- Selecting a type of additive manufacturing device (104) from a list of additive manufacturing devices provided by the digital backbone database;
- Providing a set of instructions (105) for an additive manufacturing device based on the selection of the manufacturing material and the selection of the type of additive manufacturing device by the digital backbone database, wherein the set of instructions defines a plurality of zones corresponding to the plurality of regions of the component as defined by the set of properties;
- Transmitting the set of instructions (106) to an additive manufacturing device of the selected type; and
- Manufacturing the component (107) by the additive manufacturing device based on the set of instructions.

2. Method according to claim 1,
wherein the set of properties comprises for each region of the component parameters corresponding to at least one of roughness, density, creep properties, fatigue properties, thermal durability, corrosion resistance, porosity, conductivity, thermal properties, and strength.

3. Method according to claim 1 or 2,
wherein the set of instructions comprises for each zone parameters corresponding to at least one of laser power, scan speed, hatch spacing, layer thickness, and laser pulse time, skywriting time.

4. Method according to any of claims 1 to 3,
wherein the plurality of zones comprises at least one zone corresponding to an intermediate region between two regions of the plurality of regions of the component.

5. Method according to any of claims 1 to 4,
wherein the plurality of zones comprises at least one zone corresponding to a surface of the component.

6. Method according to any of claims 1 to 5,
wherein the plurality of zones correspond to the plurality of regions in such a way, that there is a spatial beam offset between the edges of the zones and the edges of the regions.

7. Method according to claim 6,
wherein the spatial beam offset is between 50µm and 400µm.

8. Method according to any of claims 1 to 7,
wherein the set of instructions comprises instructions to pause the additive manufacturing process for a period of time before and after manufacturing steps corresponding to a contour defining a limit between two of the plurality of regions.

9. System (200) for additive manufacturing, comprising:
- an additive manufacturing device (201) for performing additive manufacturing;
- an interface device (202); and
- a digital backbone database (203);
wherein the interface device (202) is configured to transmit a set of properties defining a component to be manufactured to the digital backbone database (203), select a manufacturing material from a list of suitable manufacturing materials, and select a type of additive manufacturing device from a list of additive manufacturing devices;
wherein the digital backbone database (203) is configured to provide a list of suitable manufacturing materials based on the set of properties, provide a list of additive manufacturing devices, provide a set of instructions for an additive manufacturing device based on the selection of manufacturing material and the selection of additive manufacturing device, and transmit the set of instructions to the additive manufacturing device (201);
wherein the set of properties defines a plurality of regions of the component; and
wherein the set of instructions comprises instructions for a plurality of zones based on the plurality of regions of the component as defined by the set of properties.

10. System according to claim 9,
wherein the interface device (202) is further configured to generate the set of properties.
